# EUROPÄISCHE PATENTSCHRIFT

(11) **EP 0 409 017 B1**
(45) Veröffentlichungstag und Bekanntmachung des Hinweises auf die Patenterteilung: **17.01.1996**
(21) Anmeldenummer: 90112985.8
(22) Anmeldetag: 07.07.1990
(51) Int. Cl.: C08G 8/10

(54) **Verfahren zur Herstellung von Novolak-Harzen mit geringem Metallionengehalt**
Method for the production of novolak resins with low content of metal-ions
Procédé de préparation des résines novolaques à faible teneur en ions métalliques

(30) Priorität: 15.07.1989 DE 3923426
(43) Veröffentlichungstag der Anmeldung: 23.01.1991
(73) Patentinhaber: HOECHST AKTIENGESELLSCHAFT, D-65926 Frankfurt am Main (DE)
(72) Erfinder: Wojtech, Bernhard, Dr. Dipl.-Chem., D-6232 Bad Soden/Ts (DE); Niederstätter, Walter, Dr. Dipl.-Phys., D-6228 Eltville (DE); Thamm, Horst-Dieter, Dr. Dipl.-Chem., D-6236 Eschborn 2 (DE)

(56) Entgegenhaltungen:
- EP-A- 0 251 187
- DD-B- 247 013
- DE-C- 1 089 970
- METHODE DER ORGANISCHE CHEMIE Band XIV/2, 1963, Houben Weyl, Georg Thieme Verlag, Stuttgart, DE

## Beschreibung

Die Erfindung betrifft ein Verfahren zur Herstellung von Novolak-Harzen mit geringem Metallionengehalt.

Eine Qualitätsverbesserung von Photoresists oder Photolacken läßt sich dann errreichen, wenn man den verunreinigenden Metallionengehalt in den Photoresists weitgehend reduzieren kann. Bei den Verunreinigungen handelt es sich vorwiegend um Metallionen, insbesondere von Eisen, Natrium, Barium, Calcium, Magnesium, Kupfer und Mangan. Ursache der Verunreinigungen in den Resists ist die Harzkomponente, die als Bindemittel in den lichtempfindlichen Gemischen vorliegt. Diese Harze vom Novolak-Typ sind bevorzugt Kondensationsprodukte von Phenolen bzw. Kresolen mit Formaldehyd. Die verunreinigenden Metallionen gelangen in das Harz hauptsächlich durch den Herstellungsprozeß. Die freien phenolischen OH-Gruppen im Novolak-Harz begünstigen die Metallionenaufnahme durch Protonenaustausch und durch Komplexierung an die polaren Gruppen.

Das Auswaschen der Verunreinigungen eines in einem organischen Lösungsmittel gelösten Polymeren mit Wasser hat infolge dieser Komplexierung nur einen geringen Reinigungseffekt. Erschwerend für den Aufwand bei der Metallionenabtrennung wirkt sich der nur geringe Gehalt von wenigen ppm in den Harzlösungen zur Herstellung von Resists aus. Zur Charakterisierung der Güte der gereinigten Produkte reicht es aus, den Gehalt an Eisen und Natrium anzugeben, die als Leitmetallkationen zur Beurteilung des Reinigungseffektes dienen.

Eine Trennung durch Verflüchtigung wie etwa einer Verdampfung der Metallionen bzw. des Harzes ist nicht möglich. Auch sind thermische Reinigungsverfahren für Novolak-Harze in der Schmelze wegen ihrer hohen Viskosität und ihrer chemischen Instabilität bei stärkerem Erhitzen nicht geeignet. Erst nach Auflösen der Harze in einem organischen Lösemittel können sie einer Reinigungsoperation unterworfen werden. Fällungsverfahren scheiden deswegen aus, weil das Löslichkeitsprodukt schwer löslicher Mecallsalze bei den extrem kleinen Metallionenkonzentrationen nicht zu erreichen ist. Adsorptionsverfahren wiederum scheitern wegen der zu geringen Selektivität der Adsorbentien gegenüber Metallionenspuren im organischen Medium.

In der EP-A 0 251 187 ist ein Verfahren zur Reinigung von Novolaken beschrieben, bei dem die Novolake in organischen Lösemitteln gelöst und die Metallionen aus der Lösung dann mit einer wäßrigen Säure extrahiert werden. Die wäßrige Säure ist verdünnte Salzsäure, Schwefelsäure oder Essigsäure und hat einen pH-Wert von nicht mehr als 3. In dem Novolak zurückbleibende Spuren dieser starken Säuren können bei der späteren Verwendung jedoch zu Korrosionsproblemen führen. Deswegen wird in der EP-A auch empfohlen, die Säurespuren durch zusätzliches Waschen mit Wasser aus der Novolaklösung zu entfernen.

Es war Aufgabe der Erfindung ein Verfahren zur Herstellung von Novolak-Harzen mit geringem Metallionengehalt zu schaffen, bei dem der Bereich der Ausgangskonzentration von einigen ppm möglichst weiter erniedrigt wird und wodurch Harze zur Verfügung gestellt werden können, die den Anforderungen für den Einsatz in der Mikroelektronik genügen.

Die Aufgabe wird gelöst durch ein Verfahren zur Herstellung von Novolak-Harz mit verringertem Metallionengehalt, worin man handelsübliches Novolak-Harz in einem organischen Lösungsmittel oder Lösungsmittelgemisch in einer Konzentration von etwa 25 bis 50, vorzugsweise 30 Gewichtsprozent, löst und den Metallionengehalt der Harzlösung durch ein- oder mehrmaligen Kontakt mit einer wäßrigen Lösung einer organischen Säure vermindert, dadurch gekennzeichnet, daß die organische Säure eine niedere mehrfunktionelle Carbonsäure, die Carboxy-, Hydroxy-, Oxo-, Amino- oder Estergruppen enthält, Vinylphosphonsäure, Nitrilotriessigsäure, Ethylendinitrilotetraessigsäure, 1,2-Cyclohexylendinitrilotetraessigsäure, Diethylentriaminpentaessigsäure oder 3,6-Dioxa-octamethylendinitrilotetraessigsäure ist.

Vorzugsweise löst man die saure, vorzugsweise komplexierend wirkende Verbindung in Wasser zu etwa 0,01 bis 20 Gewichtsprozent. Den Kontakt kann man durch Zusammenbringen von flüssiger und fester Phase herstellen. Vorzugsweise stellt man den Kontakt in Form einer Flüssig-Flüssig-Extraktion her.

Den Kontakt erhält man vorzugsweise ein- oder mehrstufig im Kreuzstrom oder Gegenstrom, wobei der Kreuzstrom wegen seiner Intensität Vorteile hat.

Das Phasenvolumenverhältnis von organischer Raffinatphase (0) zu wässrigem Extraktionsmittel (W) beträgt etwa (1 bis 5): 1, vorzugsweise (2,5 bis 3):1.

Durch die Erfindung wird erreicht, daß man den Metallionengehalt um zwei bis drei Größenordnungen vermindern und dadurch Materialien herstellen kann, die höchsten Anforderungen in der Mikroelektronik genügen.

Es wurde gefunden, daß sich Metallionen aus Lösungen der Novolak-Harze in organischem wasserunlöslichem Lösemittel zum Teil extrem abtrennen lassen, wenn man diese organischen Lösungen mit wäßrigen Lösungen extrahiert, die die oben genannten Säuren enthalten. Vorzugsweise sind die organischen Säuren, die in Wasser löslich sein müssen, von denen teilweise kleinste Mengen ausreichen, niedere, mehrfunktionellen carbonsäuren, die in den weiteren polaren Gruppen aktiven Wasserstoff oder Elektronendonatoren wie Carboxyl-, Hydroxyl-, Oxo-, Amino-, oder Estergruppen enthalten und dadurch verstärkte komplexierende Eigenschaften besitzen. Hierzu zählen besonders die Dicarbonsäuren wie Oxalsäure, Malonsäure, Bernsteinsäure oder von den ungesättigten Säuren die Maleinsäure.

Eine ähnliche komplexierende Wirkung haben auch Ketocarbonsäuren oder Hydroxycarbonsäuren wie z.B. die Glykolsäure und Milchsäure oder von aromatischen Verbindungen die Salicylsäure. Besonders wirkungsvoll sind außerdem die Oxidationsprodukte mehrwertiger Alkohole wie z.B. die gut komplexierende Weinsäure, Citronensäure, Mesoxalsäure oder die 1-Ascorbinsäure. Eine andere sehr geeignete Klasse von Verbindungen, sind die in der Komplexometrie verwendeten Chelatbildner in saurer Form wie z.B. Nitrilotriessigsäure, Ethylendinitrilotetraessigsäure 1,2-Cyc-lohexylendinitrilotetraessigsäure, Diethylentriaminpentaessigsäure und 3,6-Dioxaoctamethylendinitrilotetraessigsäure, die als Titriplex ^{(R)}-Typen (Fa. Merck) im Handel sind. Auch saure Phosphorsäure-, Phosphonsäure- und Phosphinsäure-Ester sind geeignete Extraktionsmittel für Metallionen.

Für hydrometallurgische Gewinnungs- und Reinigungsverfahren sind in den letzten Jahren eine Reihe von komplex-bzw. Chelatbildnern mit selektiven Eigenschaften für bestimmte Metallionen entwickelt worden. Ihr aktiver (saurer) Wasserstoff kann durch Metallionen ersetzt werden. Außerdem sind Nebenvalenzbindungen zu anderen Elektronendonator-tragenden Resten mit N-, P- und O-Atomen im Molekül vorhanden. Dazu zählen u.a. Hydroxyoxime, Oximderivate, β-Diketone und die Dioxime der α-Diketone. Die langkettigen Extraktionsmittel, die zur Abtrennung von Metallionen aus wäßriger Lösung entwickelt wurden, sind entsprechend ihrem Bestimmungszweck in Wasser unlöslich. Die niederen Glieder dagegen, die für hydrometallurgische Zwecke ungeeignet sind, zeigen eine gewisse Wasserlöslichkeit und können daher zur Harzreinigung nach dem erfindungsgemäßen Verfahren verwendet werden, wie z.B. Dimethylglyoxim oder Acetylaceton.

Alternativ zu den in Wasser gelösten sauren Extraktionsmitteln, zeigen auch feste Kationenaustauscherharze mit sauren funktionellen Gruppen (z.B. -SO₃H, -COOH) eine gewisse, wenn auch nicht so ausgeprägte Reinigungswirkung. Hier muß man insbesondere darauf achten, daß das Ionenaustauscherharz nicht vom organischen Lösungsmittel des Harzes angequollen oder gelöst wird.

Um die Novolak-Harze in die zur Reinigung notwendige flüssige Phase zu bringen, eignen sich alle Lösemittel, in denen diese Harze löslich sind. Bevorzugt sind es polare Lösemittel z.B. höhere Ketone wie Methylisobutylketon, Glykolderivate mit Ester- bzw. Ethergruppen, Carbonsäureester, höhere Alkohole und Mischungen verschiedener Lösemittel. Der Harzgehalt in der Lösung liegt im Bereich von 25 bis 50, vorzugsweise etwa 30 Gewichtsprozent.

Für die wäßrige Extraktionsmittellösung reichen Gehalte unter 20 Gewichtsprozent der Extraktionsmittel aus, bevorzugt zwischen 0,05 und 3 Gewichtsprozent. Bei einigen Extraktionsmitteln mit begrenzter Wasserlöslichkeit liegt der Gehalt in der wäßrigen Lösung im Bereich von 100 bis 1000 ppm.

Die Extraktion kann einstufig durch einmaliges Ausrühren oder durch mehrmaliges (mehrstufiges) Ausrühren, immer mit frischer Extraktionsmittellösung (Kreuzstromextraktion), oder durch mehrstufige Gegenstromextraktion erfolgen. Obwohl Raumtemperatur bevorzugt ist, kann die Extraktion auch bei anderen Temperaturen, soweit das Harz nicht geschädigt wird, ausgeführt werden.

Nach der Extraktion und Phasentrennung lassen sich die in der organischen Phase gelösten Wasseranteile durch Destillation im Vakuum ohne Schwierigkeiten entfernen.

Die behandelten Novolak-Harz-Lösungen können unmittelbar zur Herstellung von Photoresist-Gemischen verwendet werden.

Das Verfahren soll in den folgenden Beispielen an Hand der Veränderung des Natrium- und Eisengehaltes der Harzlösung näher erläutert werden.

### Beispiele

1. Vorgelegt ist als Ausgangslösung eine Harzlösung bestehend aus 30 Gewichtsprozent Novolak-Harz (in den folgenden Beispielen nur als Harz bezeichnet) in einem organischen Lösemittelgemisch aus Ethylglykolacetat, n-Butylacetat und Xylol (in den folgenden Beispielen als EBX-Lösemittel bezeichnet). Diese organische Lösung ist mit 2,8 ppm Natrium- und 1,3 ppm Eisenionen verunreinigt. Zur Abtrennung der Metallionen wird die organische Harzlösung (0) bei Raumtemperatur mit einer wäßrigen Lösung (W), die das Extraktionsmittel in destilliertem Wasser enthält, beim Phasenvolumenverhältnis 0/W = 3/1 einstufig extraktiv ausgerührt. In der folgenden Tabelle 1 ist das Ergebnis der extraktiven Behandlung mit verschiedenen anorganischen Säuren als Extraktionsmittel zusammengefaßt. Zum Vergleich ist auch eine Extraktion unter den gleichen Bedingungen mit reinem destilliertem Wasser angegeben.

Die Bestimmung des Elements Natrium in den Harzlösungen erfolgte durch eine bekannte Flammen-Atomabsorption. Die Proben wurden dazu mit Propylenglykolmonomethyletheracetat verdünnt und durch eine sogenannte Direktmessung gegen Standards bekannter Konzentration vermessen.

Die Bestimmung von Eisen erfolgte durch Verdünnen der Proben mit dem gleichen Lösungsmittel durch Atomabsorption mit elektrothermaler Anregung und Zeeman-Untergrundkompensation. Auch hier wurden Standards bekannter Konzentrationen im Vergleich mitgemessen.

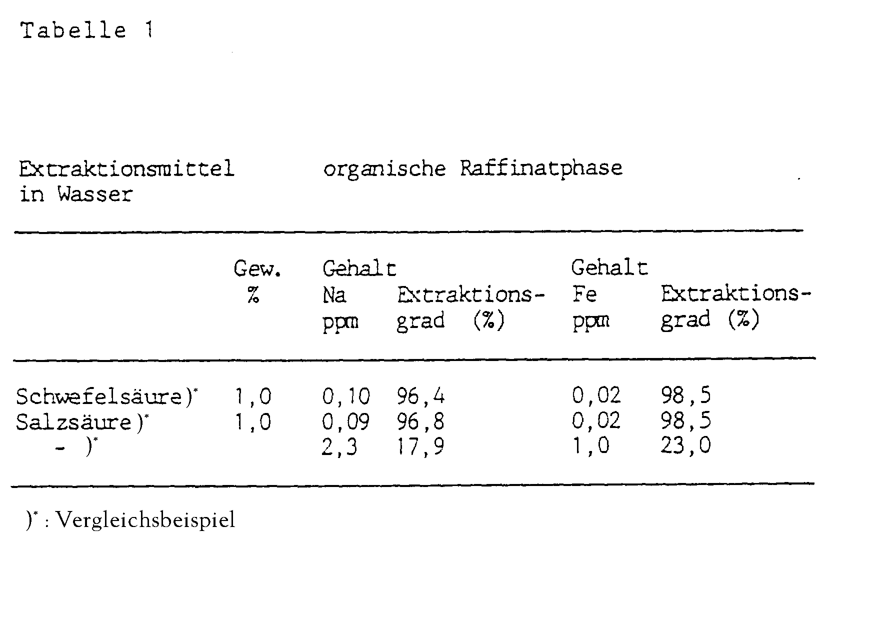

2. Eingesetzt wird als Ausgangslösung die gleiche wie im Beispiel 1 angegebene Harzlösung mit dem gleichen Verunreinigungsgrad. Die extraktive Reinigung geschieht unter denselben Bedingungen wie im Beispiel 1 nur mit organischen Extraktionsmittel in der wäßrigen Phase. Die Ergebnisse bringt die folgende Tabelle 2.

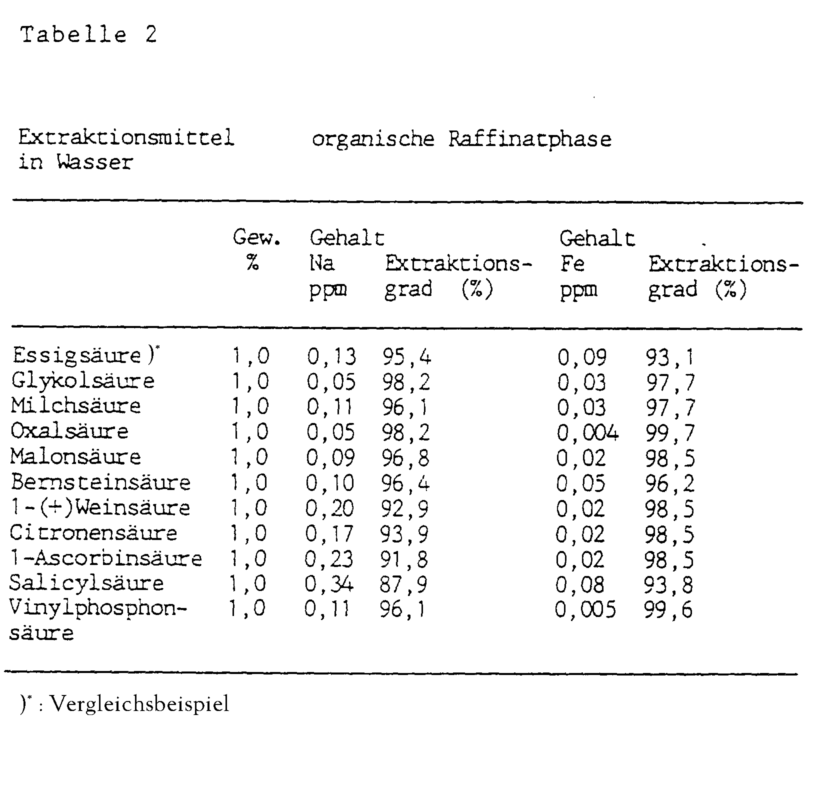

3. Vorgelegt wird die gleiche im Beispiel 1 bzw. 2 verwendete Harzlösung (0). Das Extraktionsmittel ist jetzt eine wäßrige Lösung (W) mit organischen Chelatbildnern. Die Extraktion erfolgt 2-stufig im Kreuzstrom bei einem Phasenvolumenverhältnis 0/W von je 2,4/1 und bei Raumtemperaturen. Die Ergebnisse sind in der folgenden Tabelle 3 zusammengefaßt.

**Tabelle 3**

| Extraktionsmittel in Wasser | organische Raffinatphase | | | | |
|---|---|---|---|---|---|
| | Gew. % | Gehalt Na ppm | Extraktionsgrad (%) | Gehalt Fe ppm | Extraktionsgrad (%) |
| Nitrilotriessigsäure | 0.09 | 0,10 | 96,4 | 0.02 | 98,5 |
| Ethylendinitrilotetraessigsäure | 0,12 | 0,16 | 94,3 | 0,12 | 90,8 |
| 1,2-Cyclohexylendinitrilotetraessigsäure | 0,023 | 0,13 | 95,4 | 0,04 | 96,9 |
| 3,6-Dioxaoctamethylendinitrilotetraessigsäure | 0.033 | 0.14 | 95,0 | 0,07 | 94,6 |

4. Als Ausgangslösung dient eine 30 %ige Novolakharzlösung in Propylenglykolmonomethyletheracetat mit einem Gehalt von 2,6 ppm Eisen- und 4,2 ppm Natrium-Ionen. Extrahiert wird mit wäßrigen Lösungen, die Oxalsäure bzw. Acetylaceton bzw. Dimethylglyoxim enthalten. Die Resultate bringt die folgende Tabelle 4.

**Tabelle 4**

| Extraktionsmittel in Wasser | organische Raffinatphase | | | | |
|---|---|---|---|---|---|
| | Gew. % | Gehalt Na ppm | Extraktionsgrad (%) | Gehalt Fe ppm | Extraktionsgrad (%) |
| Oxalsäure | 1 | 0,12 | 97,1 | 0,012 | 99,5 |
| Acetylaceton | 1 | 0,16 | 96,2 | 2,1 | 19,2 |
| Dimethylglyoxim | 0,04 | 0,5 | 88,1 | 0,3 | 88,5 |

5. Die Ausgangslösung (0) ist eine Lösung von 30 % Novolak in Methylisobutylketon mit einem Gehalt von 5,1 ppm Natrium- und 3,7 ppm Eisenionen. Die Extraktionsmittel sind wäßrige Lösungen (W), die 1 Gew.-% bzw. 15 Gew.-% Oxalsäure enthalten. Extrahiert wird einstufig bei Raumtemperatur und bei einem Phasenvolumenverhältnis O/W =3/1 mit in Tabelle 5 zusammengefaßten Ergebnissen:

**Tabelle 5**

| Extraktionsmittel in Wasser | organische Raffinatphase | | | | |
|---|---|---|---|---|---|
| | Gew. (%) | Gehalt Na ppm | Extraktionsgrad (%) | Gehalt Fe ppm | Extraktionsgrad (%) |
| Oxalsäure | 1 | 0,08 | 98,4 | 0,02 | 99,5 |
| Oxalsäure | 15 | 0,05 | 99,0 | 0,01 | 99,7 |

6. Die Reinigungswirkung von festen Ionenaustauschern wird an folgenden 30 Gew.-%igen Novolakharzlösungen ermittelt:
- Lösung A: mit EBX-Lösemittel enthält 2,8 ppm Natrium- und 1,3 ppm Eisenionen.
- Lösung B: mit Propylenglykolmonomethyletheracetat enthält 4,1 ppm Natrium- und 3,1 ppm Eisenionen.

Der Ionenaustauscher wird in die Harzlösung bei Raumtemperatur eingerührt und das Gleichgewicht unter Rühren eingestellt. Die Ergebnisse bringt die folgende Tabelle 6.

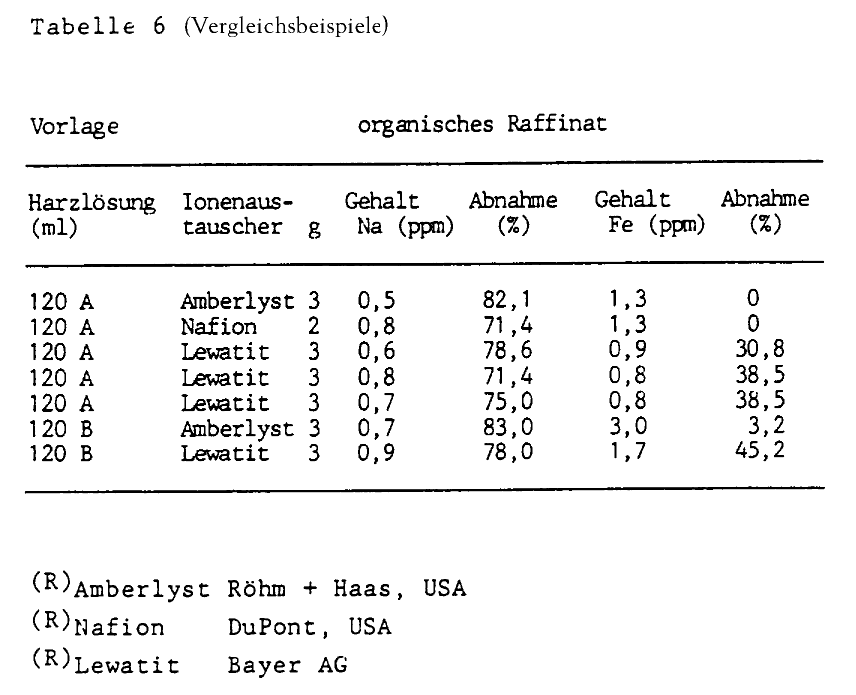

## Patentansprüche

1. Verfahren zur Herstellung von Novolak-Harz mit verringertem Metallionengehalt, worin man handelsübliches Novolak-Harz in einem organischen Lösungsmittel oder Lösungsmittelgemisch in einer Konzentration von etwa 25 bis 50 Gewichtsprozent löst und den Metallionengehalt der Harzlösung durch einoder mehrmaligen Kontakt mit einer wäßrigen Lösung einer organischen Säure vermindert, dadurch gekennzeichnet, daß die organische Säure eine niedere mehrfunktionelle Carbonsäure, die Carboxy-, Hydroxy-, Oxo-, Amino- oder Estergruppen enthält, Vinylphosphonsäure, Nitrilotriessigsäure, Ethylendinitrilotetraessigsäure, 1,2-Cyclohexylendinitrilotetraessigsäure, Diethylentriaminpentaessigsäure oder 3,6-Dioxa-octamethylendinitrilotetraessigsäure ist.

2. Verfahren nach Anspruch 1, dadurch gekennzeichnet, daß man die organische Säure in Wasser zu etwa 0,01 bis 20 Gewichtsprozent löst.

3. Verfahren nach Anspruch 1, dadurch gekennzeichnet, daß man den Kontakt in Form einer Flüssig-Flüssig-Extraktion herstellt.

4. Verfahren nach Anspruch 3, dadurch gekennzeichnet, daß man den Kontakt ein- oder mehrstufig in Kreuzstrom oder Gegenstrom durchführt.

5. Verfahren nach Anspruch 1, dadurch gekennzeichnet, daß man eine Novolak-Harz-Lösung von etwa 30 Gewichtsprozent verwendet.

6. Verfahren nach Anspruch 2, dadurch gekennzeichnet, daß man eine Lösung der organischen Säure von etwa 0,05 bis 3 Gewichtsprozent verwendet.

7. Verfahren nach Anspruch 1, dadurch gekennzeichnet, daß die organische Säure Oxalsäure, Malonsäure, Glykolsäure, Milchsäure, Weinsäure oder Citronensäure ist.

## Claims

1. A process for the preparation of novolak resins having a reduced content of metal ions, in which a commercial novolak resin is dissolved in an organic solvent or solvent mixture in a concentration of about 25 to 50 % by weight, and the metal ion content of the resin solution is reduced by bringing the solution once or repeatedly into contact with an aqueous solution of an organic acid, wherein the organic acid is a low, multifunctional carboxylic acid comprising carboxyl, hydroxyl, oxo, amino or ester groups, vinylphosphonic acid, nitrilo triacetic acid, ethylene dinitrilo tetraacetic acid, 1,2 cyclohexylene dinitrilo tetraacetic acid, diethylene triamine pentaacetic acid or 3,6 dioxa-octamethylene dinitrilo tetraacetic acid.

2. Process as claimed in claim 1, wherein the organic acid is dissolved in water in a concentration of about 0,01 to 20 % by weight.

3. Process as claimed in claim 1, wherein the contact is made by carrying out a liquid-liquid extraction.

4. Process as claimed in claim 3, wherein the contact is carried out in a single-stage or multi-stage cross-flow or counter-current treatment.

5. Process as claimed in claim 1, wherein a novolak resin solution of about 30 % by weight is used.

6. Process as claimed in claim 2, wherein a solution of the organic acid of about 0,05 to 3 % by weight is used.

7. Process as claimed in claim 1, wherein the organic acid is oxalic acid, malonic acid, glycolic acid, lactic acid, tartaric acid or citric acid.

## Revendications

1. Procédé pour la préparation d'une résine Novolaque à teneur réduite en ions métalliques, dans lequel on dissout une résine Novolaque du commerce dans un solvant organique ou mélange de solvants organiques, à une concentration d'environ 25 à 50 % en poids, et la teneur en ions métalliques de la solution de résine est abaissée par un contact unique ou répété avec une solution aqueuse d'un acide organique, caractérisé en ce que l'acide organique est un acide carboxylique polyfonctionnel inférieur qui contient des groupes carboxy, hydroxy, oxo, amino ou ester, l'acide vinylphosphonique, l'acide nitrilotriacétique, l'acide éthylènedinitrilotétraacétique, l'acide 1,2-cyclohexylènedinitrilotétraacétique, l'acide diéthylènetriaminepentaacétique ou l'acide 3,6-dioxaoctaméthylènedinitrilotétraacétique.

2. Procédé selon la revendication 1, caractérisé en ce que l'on dissout l'acide organique dans de l'eau à raison d'environ 0,01 à 20 % en poids.

3. Procédé selon la revendication 1, caractérisé en ce que l'on réalise le contact sous forme d'une extraction liquide-liquide.

4. Procédé selon la revendication 3, caractérisé en ce que l'on effectue le contact en une ou plusieurs étapes, en courant croisé ou à contre-courant.

5. Procédé selon la revendication 1, caractérisé en ce que l'on utilise une solution de résine Novolaque à environ 30 % en poids.

6. Procédé selon la revendication 2, caractérisé en ce que l'on utilise une solution de l'acide organique à environ 0,05-3 % en poids.

7. Procédé selon la revendication 1, caractérisé en ce que l'acide organique est l'acide oxalique, l'acide malonique, l'acide glycolique, l'acide lactique, l'acide tartrique ou l'acide citrique.
